# EUROPÄISCHE PATENTANMELDUNG

(11) **EP 0 761 990 A2**
(43) Veröffentlichungstag der Anmeldung: **12.03.1997**
(21) Anmeldenummer: 96111338.8
(22) Anmeldetag: 13.07.1996
(51) Int. Cl.: F16B 12/20

(54) **Verbindungsbeschlag**

(30) Priorität: 21.08.1995 AT 1411/95
(71) Anmelder: Julius Blum Gesellschaft m.b.H., A-6973 Höchst (AT)
(72) Erfinder: Röck, Erich, 6973 Höchst (AT); Hörger, Horst, 89567 Sontheim (DE)
(74) Vertreter: Torggler, Paul, Dr.

(57) **Zusammenfassung**

Ein Verbindungsbeschlag zum lösbaren Verbinden zweier plattenförmiger Möbelteile (2, 4). Es ist ein an einem der Möbelteile (2) zu befestigender Zapfen (1) vorgesehen, der an seinem freien Ende einen Kopf (8) aufweist, und ein in den anderen Möbelteil (4) einsetzbarer Drehriegel (9), der den Zapfen (1) mit zwei zumindest annähernd spiralförmig verlaufenden Haltekanten (12) am Kopf (8) arretiert und in den Möbelteil (4) zieht. Der Drehriegel (9) ist zusammen mit einem von einer Feder (14) beaufschlagten drehbaren Spannteil (13) in einem zylindrischen Gehäuse (3) gelagert. Das Gehäuse ist in den Möbelteil (4) einsetzbar. Der Zapfen (1) ragt durch eine Öffnung (7) im Mantel des Gehäuses (3). Der Drehriegel (9) und der Spannteil (13) sind miteinander gekuppelt, so daß eine Drehung des Spannteiles (13) eine Drehung des Drehriegels (9) verursacht und umgekehrt eine Drehung des Drehriegels (9) eine Drehung des Spannteiles (13).

## Beschreibung

Die Erfindung bezieht sich auf einen Verbindungsbeschlag zum lösbaren Verbinden zweier Möbelteile, insbesondere zum Verbinden zweier plattenförmiger Möbelteile, mit einem an einem der Möbelteile zu befestigenden Zapfen, der an seinem freien Ende einen Kopf aufweist, und einem in den anderen Möbelteil einsetzbaren zumindestens bereichsweise zylindrischen Gehäuse, wobei der Zapfen durch eine Öffnung in dem Mantel des Gehäuses ragt, und im Gehäuse ein Drehriegel gelagert ist, der den Zapfen mit zwei zumindest annähernd spiralförmig verlaufenden Haltekanten am Kopf arretiert und in den Möbelteil zieht.

Die EU-B1 0 058 220 zeigt einen Verbindungsbeschlag zum lösbaren Verbinden zweier im rechten Winkel zueinander stehender plattenförmiger Möbelteile, wobei in jeden Möbelteil ein Gehäuse einsetzbar ist. In einem Gehäuse ist ein von einer Feder beaufschlagter Hebel gelagert, der einen Haken aufweist. In Montagelage ragt dieser Hebel stirnseitig in das andere Gehäuse und rastet dort hinter einem Rastvorsprung ein, wodurch die beiden Möbelteile miteinander verbunden werden. Durch Verdrehen eines Gewindebolzens, der im gleichen Gehäuse gelagert ist, kann der Haken aus seiner Riegelstellung gebracht werden.

Die AT-PS 390 480 beschreibt einen Verbindungsbeschlag, bei dem ein in einem Möbelteil verankerter Zapfen mit seinem Kopf radial in einem im anderen Möbelteil gelagerten zylindrischen Spannteil ragt. Durch Verdrehen des Spannteiles wird der Zapfen in den Möbelteil hineingezogen und es kommt zu einer festen Verbindung der beiden Möbelteile.

Aufgabe der Erfindung ist es, einen Verbindungsbeschlag der eingangs erwähnten Art dahingehend zu verbessern, daß eine Spannung zwischen den beiden Möbelteilen erreicht wird, ohne daß es notwendig ist, beim Kuppeln der Verbinderteile ein Werkzeug zu verwenden und wobei der Zapfen von der Stirnseite her in den Möbelteil eingesetzt werden kann, in dem das Gehäuse lagert.

Die erfindungsgemäße Aufgabe wird dadurch erreicht, daß der Drehriegel zusammen mit einem von einer Feder beaufschlagten drehbaren Spannteil in dem Gehäuse lagert und der Drehriegel und der Spannteil miteinander gekuppelt sind, so daß eine Drehung des Spannteiles eine Drehung des Drehriegels verursacht und umgekehrt eine Drehung des Drehriegels eine Drehung des Spannteiles.

Nachfolgend wird ein Ausführungsbeispiel der Erfindung anhand der Figuren der beiliegenden Zeichnungen beschrieben.
Die Fig. 1 zeigt schematisch zwei Möbelteile, die mittels des erfindungsgemäßen Verbindungsbeschlages verbindbar sind;

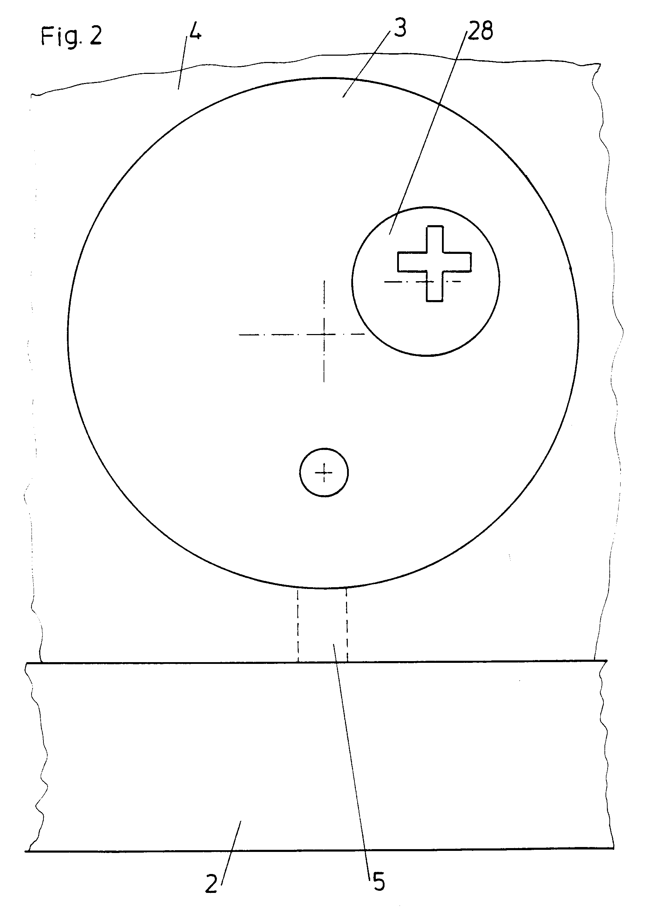

die Fig. 2 ist eine Draufsicht auf das Gehäuse, das den Drehriegel und den Spannteil enthält, wobei Abschnitte der plattenförmigen Möbelteile gezeigt sind;
die Fig. 3 ist ein Querschnitt durch ein Gehäuse, wobei die Anfangsstellung des Einführens des Zapfens in das Gehäuse gezeigt ist;

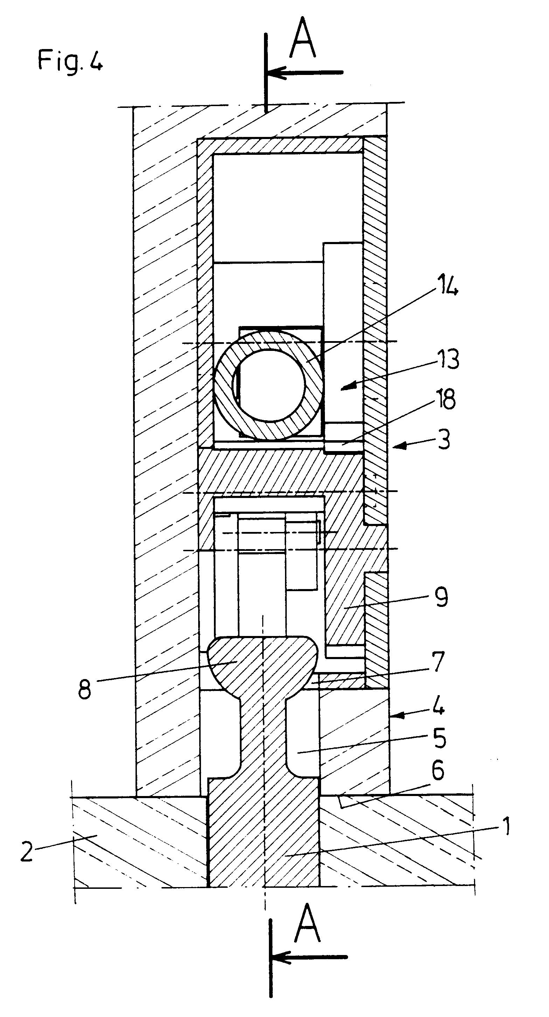

die Fig. 4 ist ein Schnitt nach der Linie A-A der Fig. 3;
die Fig. 5 zeigt einen Schnitt nach Linie A-A der Fig. 4;

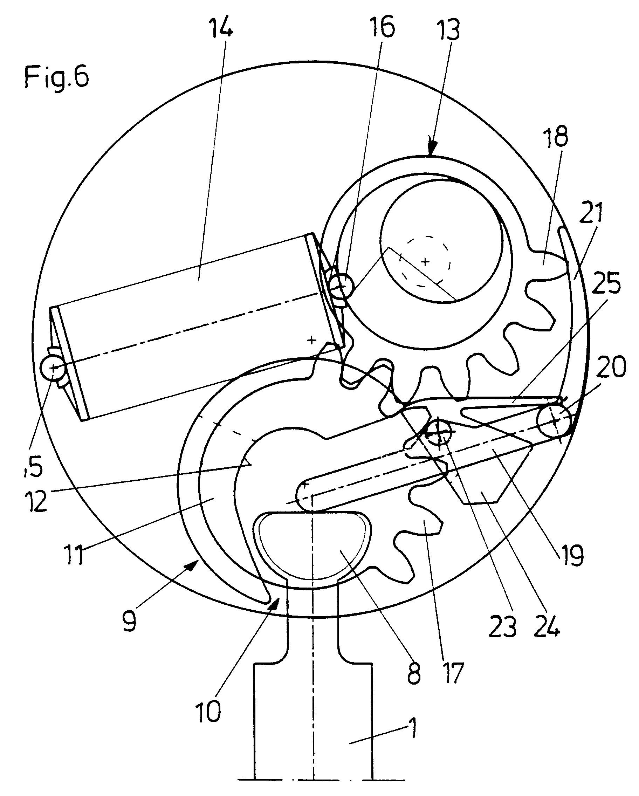

die Fig. 6 zeigt schematisch die Lage der Teile im Gehäuse bei halbeingefahrenem Zapfen;

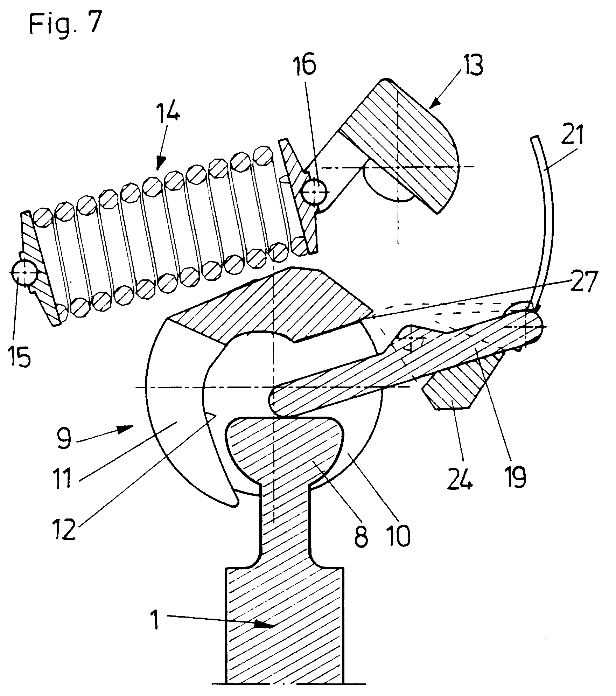

die Fig. 7 zeigt dieselbe Stellung in einem Längsschnitt entlang der Linie X-X der Fig. 5;
die Fig. 8 zeigt schematisch die Stellung der Teile des Möbelverbinders bei vollständig arretiertem Zapfen;

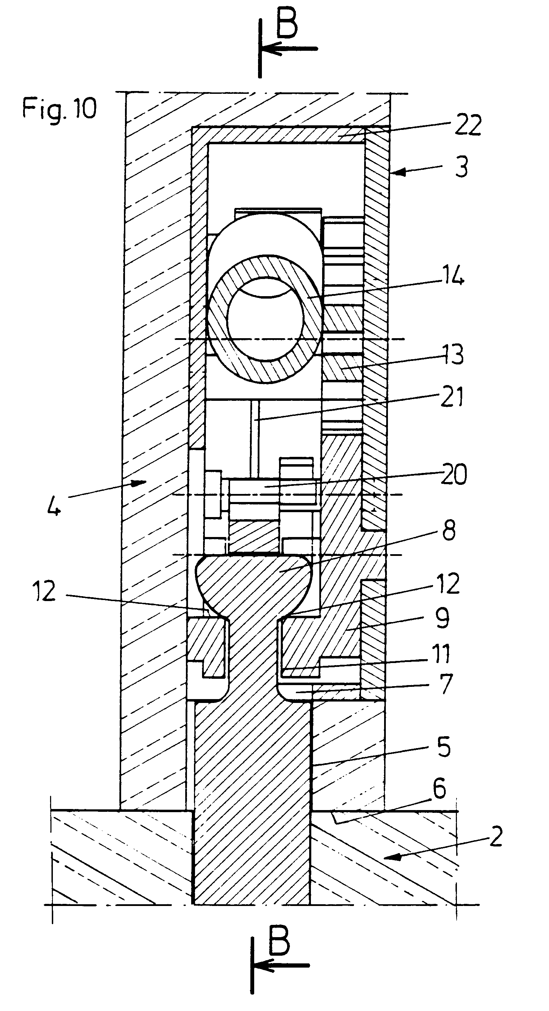

die Fig. 9 zeigt einen Schnitt nach der Linie B-B der Fig. 10, wobei das Gehäuse weggelassen ist;
die Fig. 10 zeigt einen Schnitt nach der Linie Y-Y der Fig. 9;

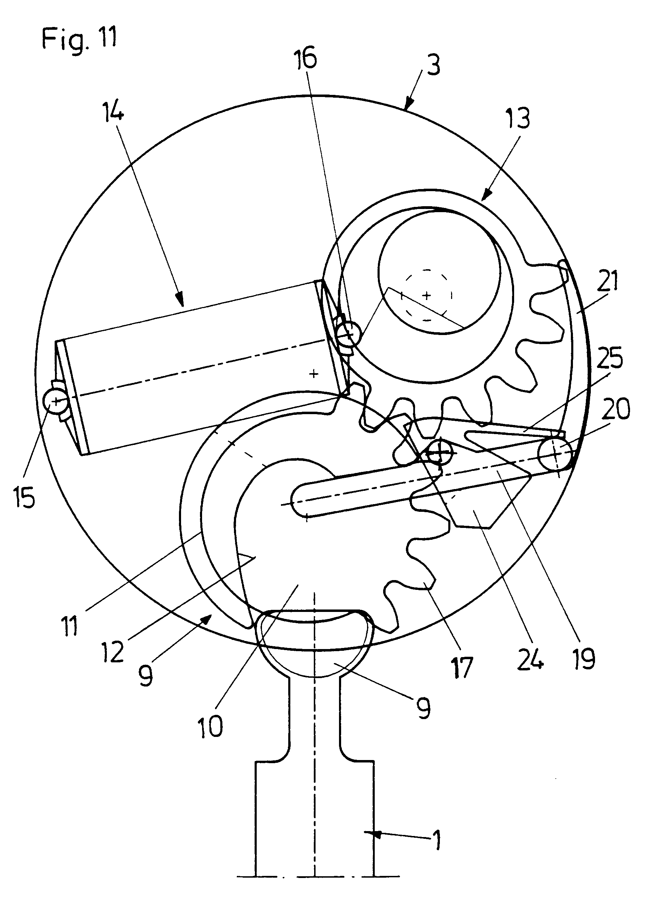

die Fig. 11 zeigt schematisch die Stellung der Riegelteile des Verbindungsbeschlages beim Entriegeln des Zapfens;

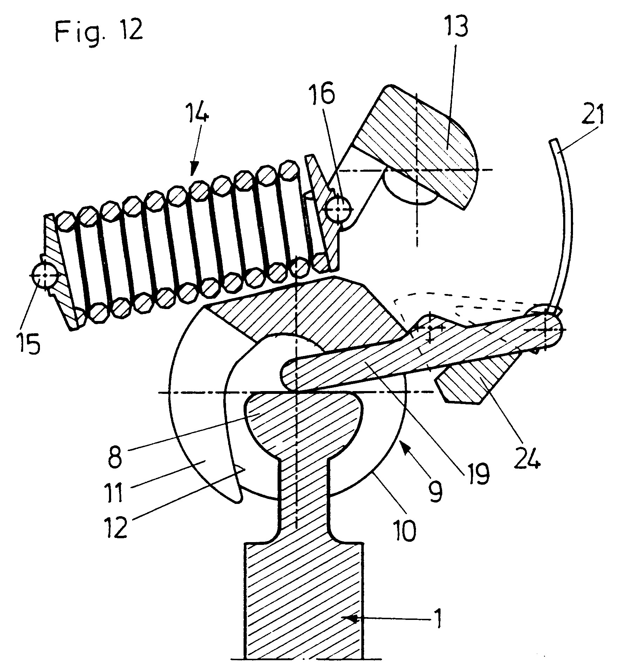

die Fig. 12 zeigt einen Schnitt durch die Teile des Verbindungsbeschlages bei entriegeltem Zapfen, wobei der Zapfen sich jedoch noch in seiner Riegelposition verbindet;

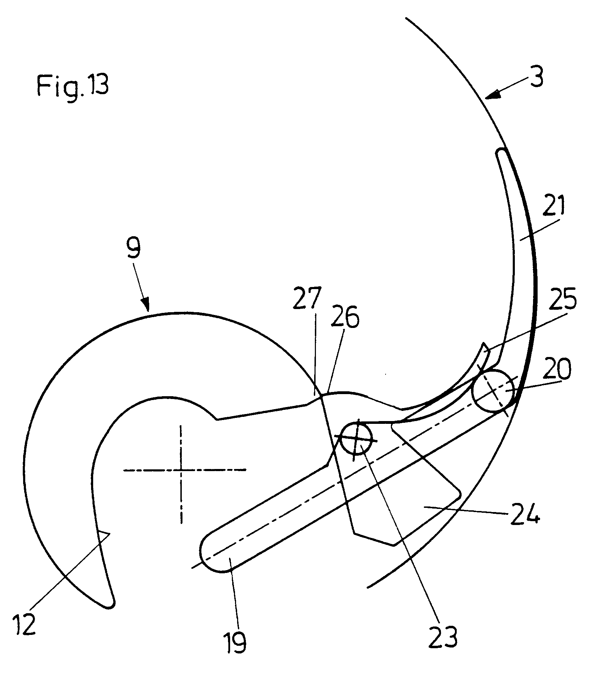

die Fig. 13 zeigt schematisch eine Ansicht des Drehriegels, des Auslösehebels und des Kipphebels in der Stellung, in der der Zapfen aus dem Gehäuse herausgezogen werden kann;

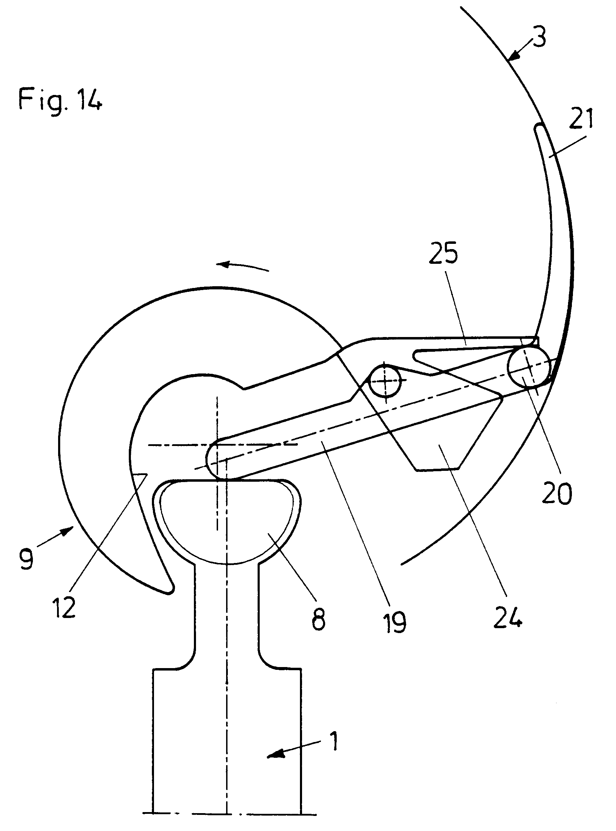

die Fig. 14 zeigt dieselbe Ansicht wie die Fig. 13 in der halbeingefahrenen Stellung des Zapfens;
die Fig. 15 zeigt eine schematische Ansicht der Teile des Riegelmechanismus bei entriegeltem Zapfen, wobei sich jedoch der Zapfen in der Riegelposition befindet;

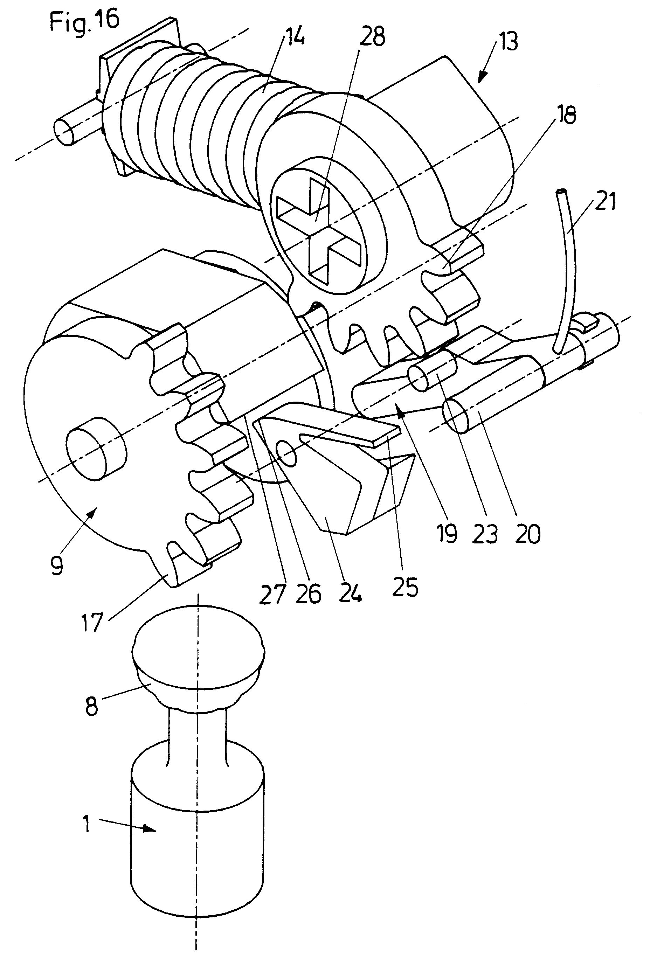

die Fig. 16 zeigt ein schematisches Schaubild der Verriegelungsteile des Verbindungsbeschlages;

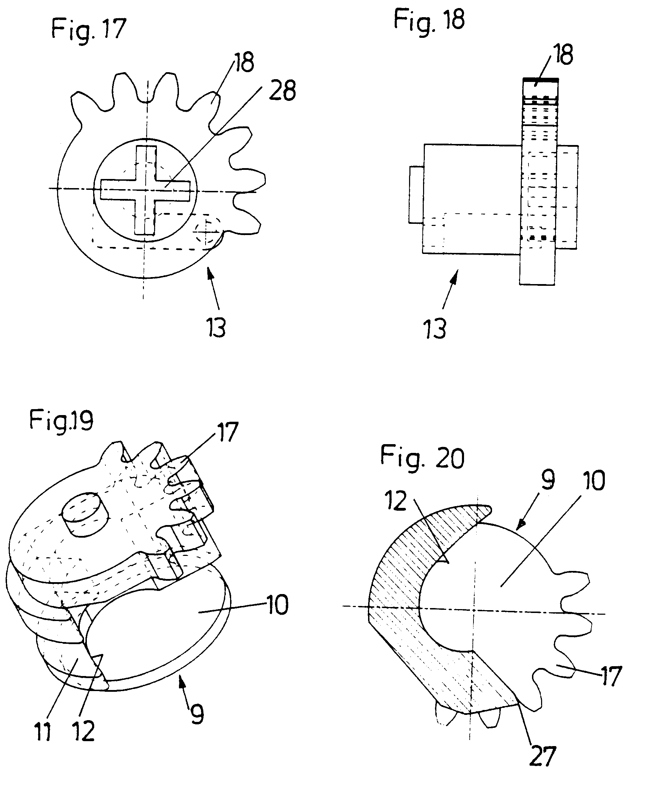

die Fig. 17 zeigt eine Stirnansicht des Spannteiles;
die Fig. 18 zeigt eine Seitenansicht des Spannteiles;
die Fig. 19 zeigt ein Schaubild des Drehriegels;
die Fig. 20 zeigt einen Querschnitt durch einen Drehriegel;

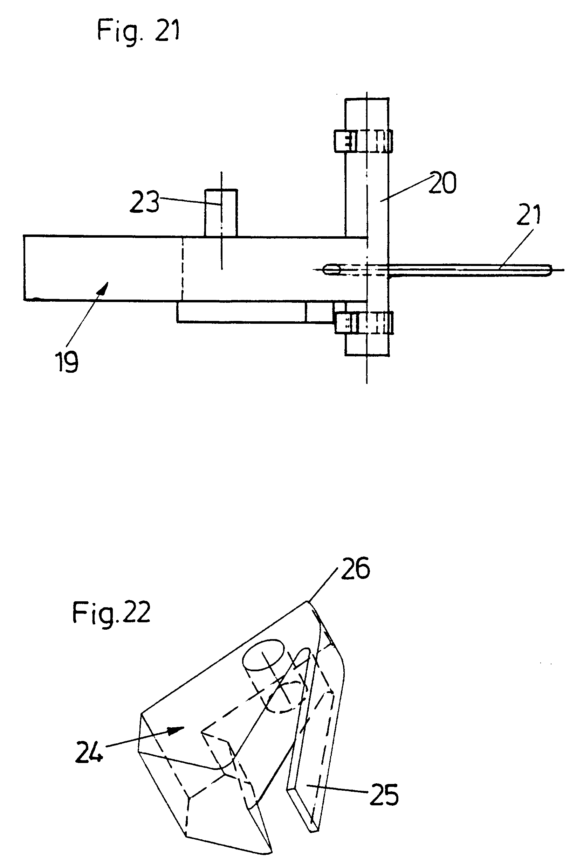

die Fig. 21 zeigt eine Draufsicht auf einen Auslösehebel; und
die Fig. 22 zeigt ein Schaubild eines Kipphebels.

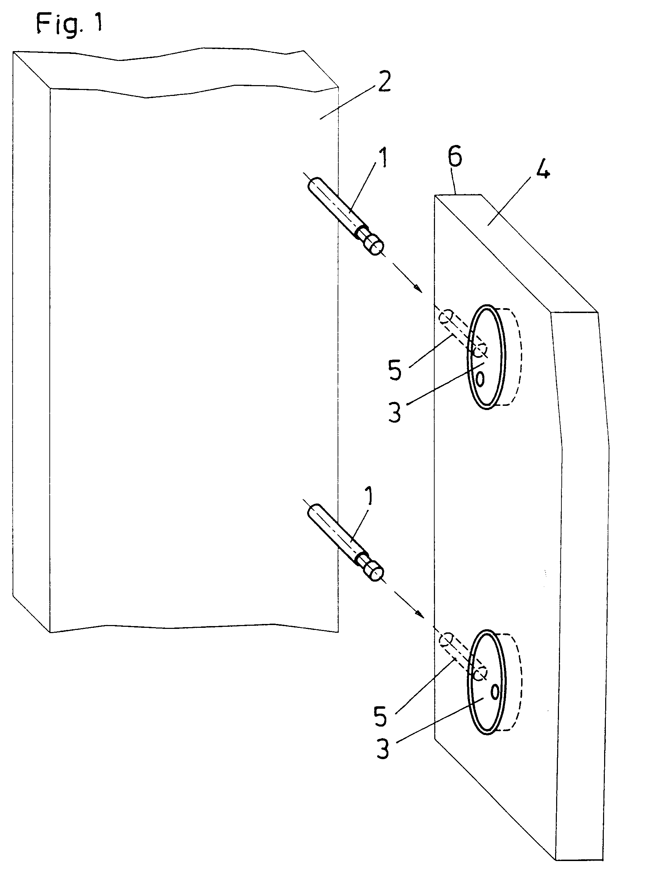

Wie aus der Fig. 1 ersichtlich sind die Zapfen 1 flachseitig in eine Möbelwand 2 eingesetzt. Auf die Art der Befestigung der Zapfen 1 in der Möbelwand 2 soll in diesem Rahmen nicht eingegangen werden. Sie kann auf jede herkömmliche Art erfolgen. Beispielsweise können die Zapfen 1 in Dübel, die in Löcher in der Möbelwand 2 eingesetzt sind, eingeschraubt werden.

Das den Kopf 8 des Zapfens 1 aufnehmende Gehäuse 3 ist ebenso flachseitig in eine Möbelwand 4 eingesetzt. In der Möbelwand 4 ist bei jedem Gehäuse eine Bohrung 5 vorgesehen, die zur Stirnseite 6 der Möbelwand 4 führt. Der Zapfen 1 ist von der Stirnseite 6 her in die Möbelwand 4 einsetzbar und ragt seitlich durch eine Öffnung 7 in das Gehäuse 3.

Der Zapfen 1 ist an seinem freien Ende mit einem Kopf 8 versehen, an dem der im Gehäuse 3 gelagerte Drehriegel 9 angreift.

Der Drehriegel 9 weist an seinem Mantel eine Öffnung 10 auf und einen Schlitz 11, durch den der Zapfen 1 ragt. Der Zapfen 1 wird mit seinem Kopf 8 in die Öffnung 10 des Drehriegels 9 eingesetzt. Beim anschließenden Verdrehen des Drehriegels 9 befindet sich der Hals des Zapfens 1 im Schlitz 11 des Drehriegels 9 und der Kopf 8 wird von zwei annähernd spiralförmig verlaufenden Haltekanten 12, die zwischen sich den Schlitz 11 abgrenzen, gehalten.

Im Gehäuse 3 befindet sich noch ein drehbarer Spannteil 13, der sowohl im Uhrzeigersinn als auch im Gegenuhrzeigersinn verdrehbar ist. Der Spannteil 13 wird von einer Feder 14 beaufschlagt, die bei der Drehbewegung des Spannteiles 13 jeweils eine Totpunktstellung überschreitet. Die Feder 14 ist im Ausführungsbeispiel eine Druckfeder. Sie ist bei 15 am Gehäuse 3 angelenkt und bei 16 am Spannteil 13.

Der Drehriegel und der Spannteil 13 weisen je eine Verzahnung 17, 18 auf, die miteinander in Eingriff sind.

Die Versahnungen 17, 18 erstrecken sich jeweils über rund ein Drittel des Umfanges des Drehriegels 9 und des Spannteiles 13.

Weiters lagert im Gehäuse 3 ein Auslösehebel 19, der mit seinem freien Ende in den Drehriegel 9 ragt. Der Auslösehebel 19 ist mittels einer Achse 20 im Gehäuse 3 gelagert. An ihm ist eine Feder 21 ausgebildet, die sich an der Gehäusewandung 22 abstützt und die den Auslösehebel 19 im Gegenuhrzeigersinn beaufschlagt, d.h. den Auslösehebel 19 zur Öffnung 7 des Gehäuses schwenkt.

Ungefähr in der Mitte des Auslösehebels 19 ist eine Achse 23 vorgesehen, auf der ein Kipphebel 24 lagert. Der Kipphebel 24 wiederum ist mit einer Feder 25 versehen, die sich am Auslösehebel 19 bzw. an der Achse 20 abstützt.

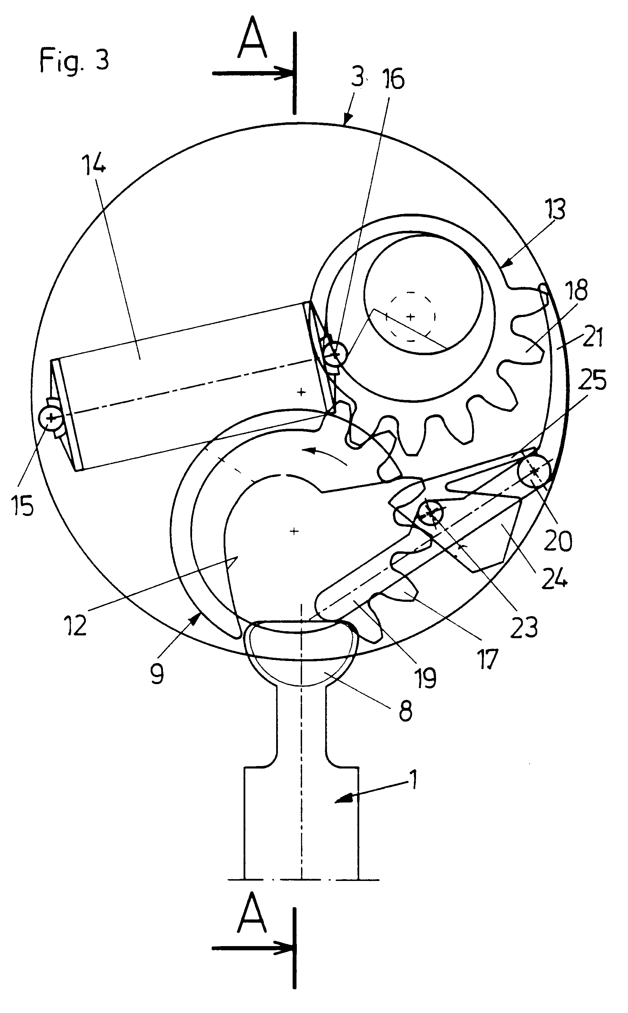

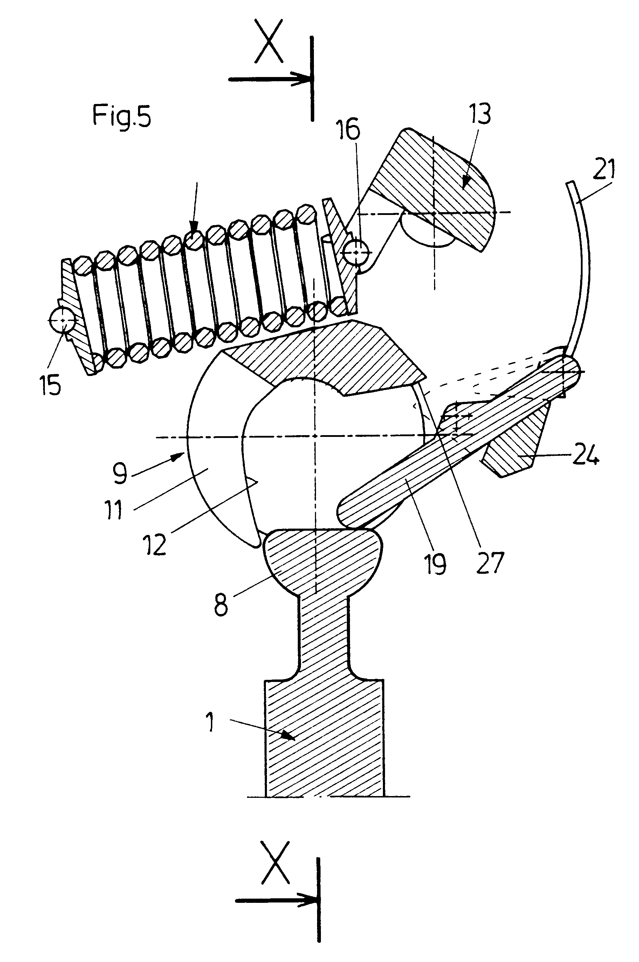

In der Ausgangssituation, d.h. wenn der Zapfen 1 in das Gehäuse 3 eingeführt wird, befinden sich sämtliche Teile des Verbindungsbeschlages in der in den Fig. 3 und 5 gezeigten Stellung. Der Auslösehebel 19 wird von der Feder 21 zur Öffnung 7 gedrückt und der Drehriegel 9 ist derart gedreht, daß die Öffnung 10 zur Öffnung 7 des Gehäuses gerichtet ist.

Die Feder 14 befindet sich unterhalb (in bezug auf die Zeichnung) ihres Totpunktes.

Wenn der Zapfen 1 mit seinem Kopf 8 am freien Ende des Auslösehebels 19 anstößt, wird der Auslösehebel 19 im Uhrzeigersinn um die Achse 20 geschwenkt. Dabei wird der Kipphebel 24 mit seiner Nase 26 gegen eine korrespondierende Nase 27 des Drehriegels 9 gedrückt. Bei einer weiteren Bewegung des Zapfens 1 zur Mitte des Gehäuses 3 hin dreht der Kipphebel 24, der vom Auslösehebel 19 geschwenkt wird, den Drehriegel 9 über die Nase 27 im Gegenuhrzeigersinn.

Dabei gelangen die Haltekanten 12 unterhalb (in bezug auf die Zeichnung) des Kopfes 8.

Über die Verzahnungen 17, 18 wird dabei der Spannteil 13 im Uhrzeigersinn gedreht. Dabei wird die Feder 14 komprimiert, bis sie ihre Totpunktstellung erreicht. Wenn der Drehriegel 9 und der Spannteil 13 über die Totpunktstellung hinausgedreht werden, dreht die Feder 14 aktiv den Spannteil 13 weiter im Uhrzeigersinn, wobei nun wiederum der Drehriegel 9 über die Verzahnungen 17, 18 mitgenommen wird und weiter im Gegenuhrzeigersinn verdreht wird. Durch diese Drehung des Drehriegels 9 wird der Zapfen 1 über seinen Kopf 8 weiter in das Gehäuse 3 hineingezogen.

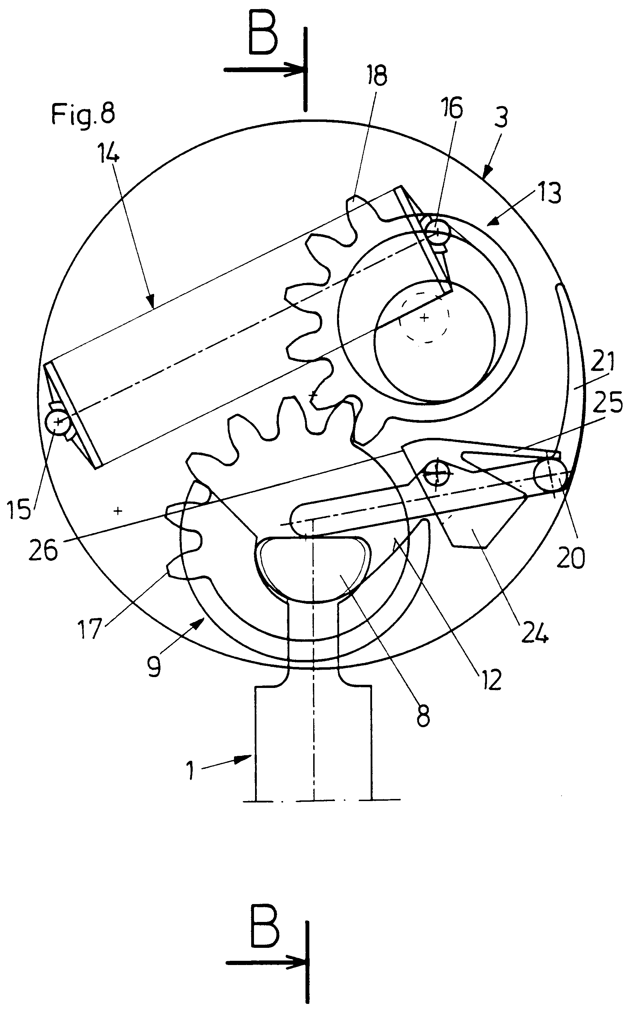

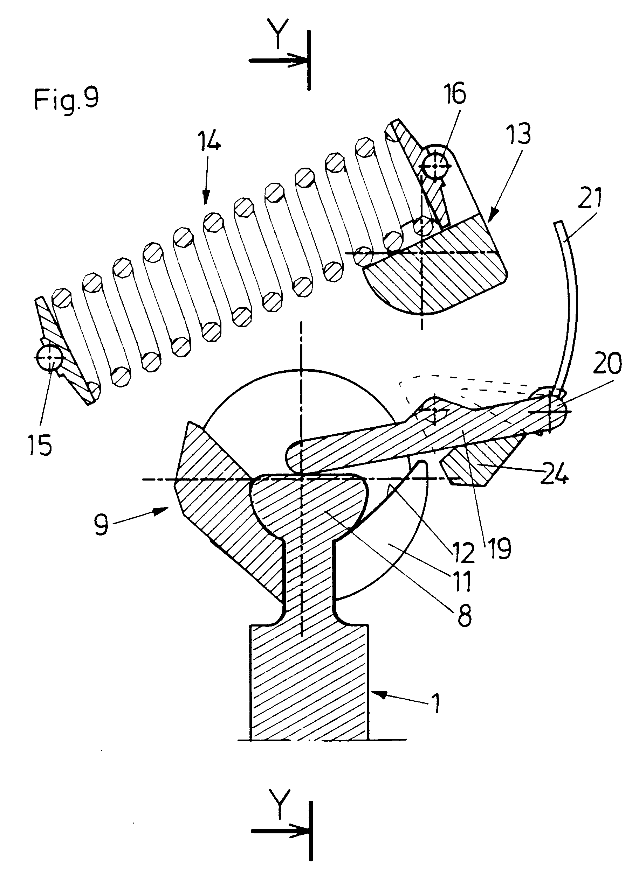

Diese Spannstellung ist in den Fig. 8 und 9 gezeigt. Die beiden Platten 2, 4 sind unter Spannung aneinandergepreßt.

Für diese Verriegelung war es nicht notwendig, den Drehriegel 9 mittels eines Werkzeuges zu verdrehen.

Um den Zapfen 1 aus seiner Verriegelung mit dem Drehriegel 9 zu lösen, wird der Spannteil 13 mittels eines Kreuzschraubenziehers, der am Sitz 28 angreift, im Gegenuhrzeigersinn verdreht. Dadurch wird der Drehriegel 9 im Uhrzeigersinn verdreht und die Haltekanten 12 geben den Kopf 8 des Zapfens 1 frei.

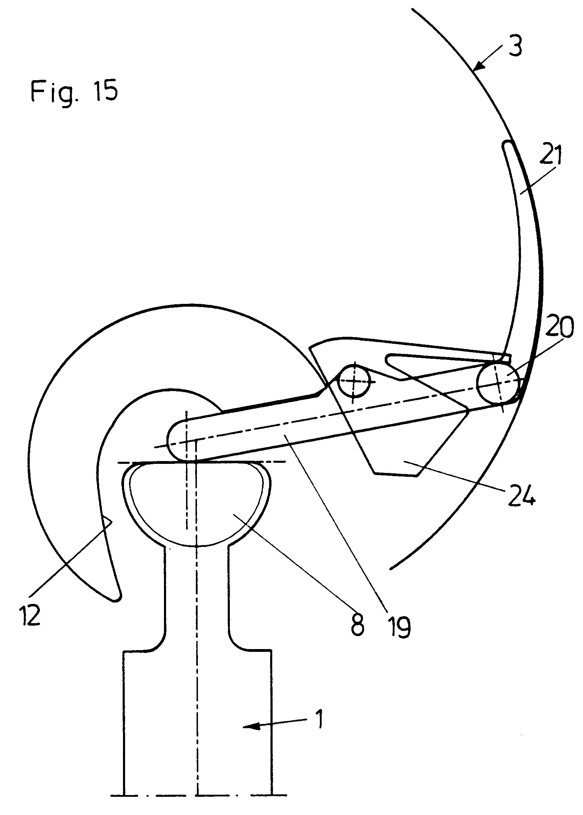

Da während dieser Drehbewegung des Spannteiles 13 und des Drehriegels 9 die Position des Zapfens 1 in bezug auf das Gehäuse 3 nicht verändert wird, bleibt der Auslösehebel 19 mit dem Kipphebel 24 in der in der Fig. 15 gezeigten Stellung. Das heißt, daß die Nase 27 des Drehriegels 9 nicht an der Nase 26 des Kipphebels 24 anstößt, sodaß die Drehbewegung des Drehriegels 9 nicht behindert wird.

Selbstverständlich wird bei dieser Drehbewegung die Feder 12 wiederum über ihren Totpunkt in die in der Fig. 3 gezeigten Stellung geschwenkt. Die Feder 14 beaufschlagt daher den Drehriegel 9 nicht in der Verriegelungsrichtung.

Wenn die Platten 2, 4 voneinander entfernt werden und der Zapfen 1 aus dem Gehäuse 3 herausgezogen wird, drückt die Feder 21 den Auslösehebel 19 in die in der Fig. 3 gezeigte Ausgangsstellung. Dabei wird der Kipphebel 24 von der an ihm angeformten Feder 25 ebenfalls wieder in die Ausgangslage gebracht, sodaß seine Nase 26 unterhalb der Nase 27 des Drehteiles 9 ragt. Der Verbindungsbeschlag befindet sich daher wieder in seiner Ausgangsstellung.

## Patentansprüche

1. Verbindungsbeschlag zum lösbaren Verbinden zweier Möbelteile, insbesondere zum Verbinden zweier plattenförmiger Möbelteile, mit einem an einem der Möbelteile zu befestigenden Zapfen, der an seinem freien Ende einen Kopf aufweist, und einem in den anderen Möbelteil einsetzbaren zumindestens bereichsweise zylindrischen Gehäuse, wobei der Zapfen durch eine Öffnung in dem Mantel des Gehäuses ragt, und im Gehäuse ein Drehriegel gelagert ist, der den Zapfen mit zwei zumindest annähernd spiralförmig verlaufenden Haltekanten am Kopf arretiert und in den Möbelteil zieht, dadurch gekennzeichnet, daß der Drehriegel (9) zusammen mit einem von einer Feder (14) beaufschlagten drehbaren Spannteil (13) in dem Gehäuse (3) lagert und der Drehriegel (9) und der Spannte (13) miteinander gekuppelt sind, so daß eine Drehung des Spannteiles (13) eine Drehung des Drehriegels (9) verursacht und umgekehrt eine Drehung des Drehriegels (9) eine Drehung des Spannteiles (13).

2. Verbindungsbeschlag nach Anspruch 1, dadurch gekennzeichnet, daß die Feder (14) bei der Drehung des Spannteiles (13) über einen Totpunkt bewegt wird.

3. Verbindungsbeschlag nach Anspruch 2, dadurch gekennzeichnet, daß die Feder (14) eine Druckfeder ist.

4. Verbindungsbeschlag nach einem der Ansprüche 1 bis 3, gekennzeichnet durch einen im Gehäuse (3) gelagerten Auslösehebel (19), der in den Drehriegel (9) ragt und an dem der Kopf (8) des Zapfens (1) anstößt und auf dem ein federbeaufschlagter Kipphebel (24) drehbar gelagert ist, der beim Einschieben des Zapfens (1) in die Sperrstellung an einer Nase (17) des Drehriegels (9) anschlägt und diesen in die Sperrstellung dreht.

5. Verbindungsbeschlag nach Anspruch 4, dadurch gekennzeichnet, daß eine Feder (21) vorgesehen ist, die sich am Gehäuse (8) abstützt und die den Auslösehebel (19) entgegen der Einschieberichtung des Zapfens (1) schwenkt.

6. Verbindungsbeschlag nach Anspruch 1, dadurch gekennzeichnet, daß der Spannteil (13) und der Drehriegel (9) über Verzahnungen (17, 18) miteinander in Eingriff sind.

7. Verbindungsbeschlag nach Anspruch 6, dadurch gekennzeichnet, daß Verzahnungen (17, 18) kreisbogenförmig ausgeführt sind.

8. Verbindungsbeschlag nach Anspruch 6 oder 7, dadurch gekennzeichnet, daß der Drehriegel (9) und der Spannteil (13) korrespondierende kreisförmige und scheibenförmige Abschnitte aufweisen, an derem Umfang die Versahnungen (17, 18) ausgebildet sind.

9. Verbindungsbeschlag nach einem der Ansprüche 1 bis 8, dadurch gekennzeichnet, daß am Spannteil (13) ein Sitz (28) für den Angriff eines Werkzeuges, beispielsweise für einen Kreuzschraubendreher vorgesehen ist.

10. Verbindungsbeschlag nach Anspruch 4, dadurch gekennzeichnet, daß am Auslösehebel (19) ein seitlich abstehender Achsstümmel (23) ausgebildet ist, auf dem der Kipphebel (24) gelagert ist.
